# FASCICULE DE BREVET EUROPEEN

(11) **EP 1 074 702 B1**
(45) Date de publication et mention de la délivrance du brevet: **03.03.2004**
(21) Numéro de dépôt: 00402046.7
(22) Date de dépôt: 18.07.2000
(51) Int. Cl.: F01N 3/023, F02D 41/08, F02D 41/02

(54) **Système d'aide au déclenchement de la régénération d'un filtre à particules intégré dans une ligne d'échappement d'un moteur de véhicule automobile**
Vorrichtung zur Einleitung der Regeneration eines Partikelfilters im Abgassystem eines Verbrennungsmotors
Apparatus for initiating the regeneration of a particulate filter in the exhaust system of an internal combustion engine

(30) Priorité: 02.08.1999 FR 9910034
(43) Date de publication de la demande: 07.02.2001
(73) Titulaire: Peugeot Citroen Automobiles SA, 92200 Neuilly sur Seine (FR)
(72) Inventeur: Le Tallec, Patrice, 78500 Satrouville (FR); Salvat, Olivier, 75010 Paris (FR); Portalier, Jacques, 92100 Boulogne (FR)
(74) Mandataire: Habasque, Etienne Joel Jean-François

(56) Documents cités:
- EP-A- 0 516 692
- DE-A- 3 408 057
- DE-C- 4 239 357
- US-A- 5 327 992
- PATENT ABSTRACTS OF JAPAN vol. 013, no. 130 (M-808), 30 mars 1989 (1989-03-30) & JP 63 297722 A (TOYOTA AUTOM LOOM WORKS LTD), 5 décembre 1988 (1988-12-05)

## Description

La présente invention concerne un système d'aide au déclenchement de la régénération d'un filtre à particules intégré dans une ligne d'échappement d'un moteur de véhicule automobile.

De tels filtres ont été intégrés dans les lignes d'échappement des moteurs de véhicules, afin de réduire le niveau des émissions polluantes liées au fonctionnement de ceux-ci.

Cependant, ces filtres doivent être régulièrement régénérés.

Le déclenchement de cette régénération ne pose pas de problème particulier lorsque le moteur du véhicule fonctionne sous une charge importante dans la mesure où le moteur étant chargé, la température des gaz d'échappement de celui-ci est relativement élevée, ce qui permet aux particules ou suies piégées dans le filtre, d'atteindre leur température de combustion.

Mais ceci n'est pas le cas lorsque le véhicule fonctionne à faible charge comme par exemple lorsqu'il circule en ville ou autre.

On conçoit alors que la température des gaz d'échappement du moteur du véhicule n'est pas suffisante pour permettre au filtre à particules d'atteindre leur seuil de combustion.

Ceci se traduit alors par des problèmes par exemple de colmatage du filtre.

On connaît du document DE-C-42 29 357, un système conforme au préambule de la revendication 1 et qui permet de charger le moteur du véhicule afin d'assurer la régénération du filtre.

Le but de l'invention est de proposer des variantes de réalisation d'un tel système.

A cet effet, l'invention a pour objet un système d'aide au déclenchement de la régénération d'un filtre à particules intégré dans une ligne d'échappement d'un moteur de véhicule automobile, comportant au moins un équipement fonctionnel du véhicule, formant une charge électrique sur le réseau d'alimentation en énergie des équipements fonctionnels du véhicule, dont la source est activée par le moteur du véhicule, afin de charger ce réseau et donc le moteur du véhicule, pour faire grimper la température des gaz d'échappement du moteur du véhicule afin d'aider au déclenchement de la régénération du filtre, caractérisé en ce qu'il comporte en outre des moyens d'analyse de l'état de colmatage du filtre pour déclencher le fonctionnement de l'équipement fonctionnel qui est formé par une lunette arrière chauffante du véhicule.

L'invention a également pour objet un système d'aide au déclenchement de la régénération d'un filtre à particules intégré dans une ligne d'échappement d'un moteur de véhicule automobile, comportant au moins un équipement fonctionnel du véhicule, formant une charge électrique sur le réseau d'alimentation en énergie des équipements fonctionnels du véhicule, dont la source est activée par le moteur du véhicule, afin de charger ce réseau et donc le moteur du véhicule, pour faire grimper la température des gaz d'échappement du moteur du véhicule afin d'aider au déclenchement de la régénération du filtre, caractérisé en ce qu'il comporte en outre des moyens d'analyse de l'état de colmatage du filtre pour déclencher le fonctionnement de l'équipement fonctionnel qui est formé par un groupe motoventilateur du véhicule.

Enfin, l'invention a également pour objet un système d'aide au déclenchement de la régénération d'un filtre à particules intégré dans une ligne d'échappement d'un moteur de véhicule automobile, comportant au moins un équipement fonctionnel du véhicule, formant une charge électrique sur le réseau d'alimentation en énergie des équipements fonctionnels du véhicule, dont la source est activée par le moteur du véhicule, afin de charger ce réseau et donc le moteur du véhicule, pour faire grimper la température des gaz d'échappement du moteur du véhicule afin d'aider au déclenchement de la régénération du filtre, caractérisé en ce qu'il comporte en outre des moyens d'analyse de l'état de colmatage du filtre pour déclencher le fonctionnement de l'équipement fonctionnel qui est formé de bougies de préchauffage du moteur du véhicule.

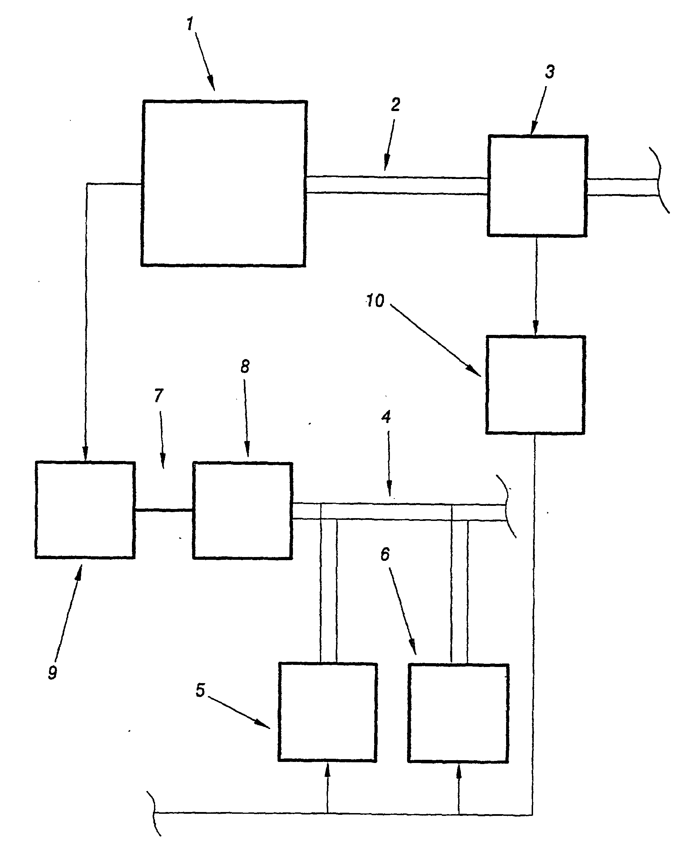

L'invention sera mieux comprise à la lecture de la description qui va suivre, donnée uniquement à titre d'exemple et faite en se référant au dessin annexé, qui représente un schéma synoptique illustrant la structure générale d'un moteur de véhicule automobile équipé d'un filtre à particules et d'un système d'aide au déclenchement de sa régénération, selon l'invention.

Sur cette figure, le moteur est désigné par la référence générale 1 et est associé à une ligne d'échappement désignée par la référence générale 2 dans laquelle est intégré un filtre à particules désigné par la référence générale 3.

De plus, le véhicule est équipé d'un réseau d'alimentation en énergie électrique désigné par la référence générale 4, qui permet d'alimenter les différents organes fonctionnels du véhicule, tels que par exemple, les organes désignés par les références générales 5 et 6 sur cette figure.

La source d'alimentation de ce réseau est activée par le moteur du véhicule et est désignée par la référence générale 7 sur cette figure.

Cette source comporte par exemple une batterie 8 associée à un alternateur 9 permettant la charge de celle-ci et entraîné par le moteur du véhicule.

On conçoit alors que lorsque le moteur du véhicule tourne, il entraîne en rotation l'alternateur pour assurer la charge de la batterie et une alimentation correcte du réseau d'alimentation du véhicule.

Dans le système selon l'invention, le filtre à particules 3 est associé à des moyens 10 d'analyse de son fonctionnement qui permettent de déterminer lorsqu'il y a lieu de régénérer ce filtre, de façon classique.

Ces moyens présentent n'importe quelle structure appropriée, permettant de détecter par exemple un risque de colmatage du filtre afin de déclencher sa régénération.

Dans ce cas, ces moyens 10 sont adaptés pour raccorder sur le réseau d'alimentation en énergie électrique 4 du véhicule, au moins une charge électrique afin de charger ce réseau et donc le moteur du véhicule pour faire grimper la température des gaz d'échappement du moteur du véhicule et aider au déclenchement de la régénération du filtre.

Dans l'exemple de réalisation représenté, la charge électrique est par exemple formée par un ou plusieurs des équipements fonctionneis 5,6 du véhicule.

Comme cela est illustré, on peut en effet constater que les moyens 10 d'analyse et de raccordement sont adaptés pour déclencher le fonctionnement des organes fonctionnels 5 et 6 du véhicule en cas de besoin pour assurer une charge du réseau d'alimentation en énergie électrique du véhicule et donc du moteur de celui-ci afin d'aider au déclenchement de la régénération du filtre.

Ces organes fonctionnels du véhicule peuvent comporter par exemple la lunette arrière chauffante de celui-ci, le groupe motoventilateur de celui-ci, les bougies de préchauffage du moteur du véhicule, etc.

On conçoit alors qu'avec un tel système, il est possible de charger le moteur du véhicule afin d'aider au déclenchement de la régénération du filtre à particules même lorsque le véhicule fonctionne normalement sous faible charge par exempte en ville.

Il va de soi bien entendu que différents modes de réalisation d'un tel système peuvent être envisagés, sans sortir du cadre des revendications.

## Revendications

1. Système d'aide au déclenchement de la régénération d'un filtre à particules (3) intégré dans une ligne d'échappement (2) d'un moteur (1) de véhicule automobile, comportant au moins un équipement fonctionnel (5,6) du véhicule, formant une charge électrique sur le réseau (4) d'alimentation en énergie des équipements fonctionnels du véhicule, dont la source (7) est activée par le moteur du véhicule, afin de charger ce réseau et donc le moteur du véhicule, pour faire grimper la température des gaz d'échappement du moteur du véhicule afin d'aider au déclenchement de la régénération du filtre, **caractérisé en ce qu'**il comporte en outre des moyens d'analyse de l'état de colmatage du filtre (3) pour déclencher le fonctionnement de l'équipement fonctionnel qui est formé par une lunette arrière chauffante du véhicule.

2. Système d'aide au déclenchement de la régénération d'un filtre à particules (3) intégré dans une ligne d'échappement (2) d'un moteur (1) de véhicule automobile, comportant au moins un équipement fonctionnel (5,6) du véhicule, formant une charge électrique sur le réseau (4) d'alimentation en énergie des équipements fonctionnels du véhicule, dont la source (7) est activée par le moteur du véhicule, afin de charger ce réseau et donc le moteur du véhicule, pour faire grimper la température des gaz d'échappement du moteur du véhicule afin d'aider au déclenchement de la régénération du filtre, **caractérisé en ce qu'**il comporte en outre des moyens d'analyse de l'état de colmatage du filtre (3) pour déclencher le fonctionnement de l'équipement fonctionnel qui est formé par un groupe motoventilateur du véhicule.

3. Système d'aide au déclenchement de la régénération d'un filtre à particules (3) intégré dans une ligne d'échappement (2) d'un moteur (1) de véhicule automobile, comportant au moins un équipement fonctionnel (5,6) du véhicule, formant une charge électrique sur le réseau (4) d'alimentation en énergie des équipements fonctionnels du véhicule, dont la source (7) est activée par le moteur du véhicule, afin de charger ce réseau et donc le moteur du véhicule, pour faire grimper la température des gaz d'échappement du moteur du véhicule afin d'aider au déclenchement de la régénération du filtre, **caractérisé en ce qu'**il comporte en outre des moyens d'analyse de l'état de colmatage du filtre (3) pour déclencher le fonctionnement de l'équipement fonctionnel qui est formé de bougies de préchauffage du moteur du véhicule.

## Patentansprüche

1. Auslösehilfssystem für die Regeneration eines Partikelfilters (3), der in eine Auspuffleitung (2) eines Kraftfahrzeugmotors (1) eingebaut ist, mindestens eine Funktionsausrüstung (5, 6) für das Fahrzeug umfassend, die eine Strombelastung im Energieversorgungsnetz (4) für Funktionsausrüstungen des Fahrzeugs bildet, deren Quelle (7) durch den Motor des Fahrzeugs aktiviert wird, um dieses Netz und somit den Motor des Fahrzeugs mit einer Last zu beaufschlagen, um die Temperatur der Auspuffgase des Motors des Fahrzeugs ansteigen zu lassen, um zur Auslösung der Regeneration des Filters beizutragen,
**dadurch gekennzeichnet, dass**
es darüber hinaus Prüfeinrichtungen für den Verstopfungszustand des Filters (3) umfasst, um den Betrieb der Funktionsausrüstung auszulösen, die von einer beheizbaren Heckscheibe des Fahrzeugs gebildet ist.

2. Auslösehilfssystem für die Regeneration eines Partikelfilters (3), der in eine Auspuffleitung (2) eines Kraftfahrzeugmotors (1) eingebaut ist, mindestens eine Funktionsausrüstung (5, 6) für das Fahrzeug umfassend, die eine Strombelastung im Energieversorgungsnetz (4) für Funktionsausrüstungen des Fahrzeugs bildet, deren Quelle (7) durch den Motor des Fahrzeugs aktiviert wird, um dieses Netz und somit den Motor des Fahrzeugs mit einer Last zu beaufschlagen, um die Temperatur der Auspuffgase des Motors des Fahrzeugs ansteigen zu lassen, um zur Auslösung der Regeneration des Filters beizutragen,
**dadurch gekennzeichnet, dass**
es darüber hinaus Prüfeinrichtungen für den Verstopfungszustand des Filters (3) umfasst, um den Betrieb der Funktionsausrüstung auszulösen, die durch eine Lüftersatz-Einheit des Fahrzeugs gebildet ist.

3. Auslösehilfssystem für die Regeneration eines Partikelfilters (3), der in eine Auspuffleitung (2) eines Kraftfahrzeugmotors (1) eingebaut ist, mindestens eine Funktionsausrüstung (5, 6) für das Fahrzeug umfassend, die eine Strombelastung im Energieversorgungsnetz (4) für Funktionsausrüstungen des Fahrzeugs bildet, deren Quelle (7) durch den Motor des Fahrzeugs aktiviert wird, um dieses Netz und somit den Motor des Fahrzeugs mit einer Last zu beaufschlagen, um die Temperatur der Auspuffgase des Motors des Fahrzeugs ansteigen zu lassen, um zur Auslösung der Regeneration des Filters beizutragen,
**dadurch gekennzeichnet, dass**
es darüber hinaus Prüfeinrichtungen für den Verstopfungszustand des Filters (3) umfasst, um den Betrieb der Funktionsausrüstung auszulösen, die durch Anheizkerzen des Motors des Fahrzeugs gebildet ist.

## Claims

1. A system for assisting triggering regeneration of a particle filter (3) integrated into an exhaust system (2) of an automobile vehicle engine (1), the system including at least one functional unit (5, 6) of the vehicle forming an electrical load on a power supply network (4) for functional units of the vehicle, the power supply (7) of which network is activated by the engine of the vehicle, in order to load said network and therefore the engine of the vehicle in order to raise the temperature of the exhaust gases from the engine of the vehicle to assist triggering regeneration of the filter, which system is **characterised in that** it further includes means for analysing the degree of clogging of the filter (3) to trigger the operation of said functional unit, which consists of a heated rear window of the vehicle.

2. A system for assisting triggering regeneration of a particle filter (3) integrated into an exhaust system (2) of an automobile vehicle engine (1), the system including at least one functional unit (5, 6) of the vehicle forming an electrical load on a power supply network (4) for functional units of the vehicle, the power supply (7) of which network is activated by the engine of the vehicle, in order to load said network and therefore the engine of the vehicle in order to raise the temperature of the exhaust gases from the engine of the vehicle to assist triggering regeneration of the filter, which system is **characterised in that** it further includes means for analysing the degree of clogging of the filter (3) to trigger the operation of said functional unit, which consists of an electric fan of the vehicle.

3. A system for assisting triggering regeneration of a particle filter (3) integrated into an exhaust system (2) of an automobile vehicle engine (1), the system including at least one functional unit (5, 6) of the vehicle forming an electrical load on a power supply network (4) for functional units of the vehicle, the power supply (7) of which network is activated by the engine of the vehicle, in order to load said network and therefore the engine of the vehicle in order to raise the temperature of the exhaust gases from the engine of the vehicle to assist triggering regeneration of the filter, which system is **characterised in that** it further includes means for analysing the degree of clogging of the filter (3) to trigger the operation of said functional unit, which consists of glow plugs for preheating the engine of the vehicle.
